# EUROPÄISCHE PATENTSCHRIFT

(11) **EP 0 886 086 B1**
(45) Veröffentlichungstag und Bekanntmachung des Hinweises auf die Patenterteilung: **21.04.2004**
(21) Anmeldenummer: 98109076.4
(22) Anmeldetag: 19.05.1998
(51) Int. Cl.: F16J 15/08

(54) **Flachdichtung**
Flat gasket
Garniture plate

(30) Priorität: 19.06.1997 DE 19725987
(43) Veröffentlichungstag der Anmeldung: 23.12.1998
(73) Patentinhaber: Elring Klinger AG, 72581 Dettingen (DE)
(72) Erfinder: Zerfass, Hans Rainer, Dr., 65232 Taunusstein (DE); Brucker, Stephan, 61462 Königstein (DE)
(74) Vertreter: Sparing - Röhl - Henseler Patentanwälte

(56) Entgegenhaltungen:
- EP-A- 0 094 616
- EP-A- 0 320 826
- EP-A- 0 797 029
- DE-A- 3 802 090
- DE-A- 3 905 922
- DE-B- 1 264 902
- GB-A- 2 091 824
- US-A- 5 582 415

## Beschreibung

Die Erfindung betrifft eine Flachdichtung zum Abdichten einer Trennfuge zwischen zwei Bauteilen nach dem Oberbegriff des Anspruchs 1.

Es ist bekannt, aus einem oder mehreren dünnen Metallblechlagen bestehende Flachdichtungen zum Abdichten einer Trennfuge zwischen zwei Bauteilen zu verwenden, wobei die Metallbleche ein- oder beidseitig mit einer dünnen, beispielsweise elastomeren Mikroabdichtungsschicht versehen sind. Derartige Flachdichtungen weisen als mehrschichtige Flachdichtungen häufig Funktionslagen auf, die mit Sicken oder Halbsikken versehen sind, die um abzudichtende Öffnungen herum verlaufen. Auch einschichtige Flachdichtungen sind oft derart gestaltet. Derartige Flachdichtungen werden beispielsweise als Zylinderkopfdichtungen oder zur Abdichtung der Trennfuge zwischen ölwanne und Motorblock eines Verbrennungsmotors oder an anderen Stellen von Verbrennungsmotoren verwendet.

Derartige Dichtungen eignen sich jedoch nicht für solche Fälle, in denen die Bauteile Relativbewegungen, z.B. Mikroschwingungen in Richtung der Dichtungsebene, unterliegen bzw. wenn Drehmomente in die Trennfuge zwischen den Bauteilen eingeleitet werden. Aufgrund des niedrigen Reibbeiwertes der Flachdichtung ist trotzdem der Verschleiß durch Mikroschwingungen erheblich oder die Verdrehsicherheit der Bauteile oftmals nicht ausreichend bzw. die Übertragung eines Drehmoments nicht möglich.

Aus der DE-A-38 02 090 ist ein metallisches Flachdichtungsmaterial bekannt, das Graphitpulver als Festschmierstoff neben weißen mineralischen Füllstoffen zur Verbesserung der Festigkeit und geringe Anteile Metalloxide, die der Vernetzung dienen, enthält. Das Flachdichtungsmaterial findet Verwendung als Mikroabdichtungsschicht in ein- oder mehrlagigen Flachdichtungen, insbesondere für Verbrennungskraftmaschinen.

Aus der DE-A-1 264 902 ist eine Flachdichtung aus Weichstoff, wie z.B. Asbest, bekannt, deren Oberfläche mit einer Schicht aus einem feinkörnigen Hartstoff, wie Korund, der auf einer Oberfläche mittels Harz oder ähnlichem auf der Flachdichtung verankert wird, versehen ist. Der Hartstoff dient dazu, ein Herausschieben der Flachdichtung aus dem Dichtungsspalt bei nicht erreichter Mindestflächenpressung zu verhindern, und unmittelbar mit den Dichtflächen in Eingriff zu gelangen, indem sich der Hartstoff teilweise in die bindefähige Oberschicht der Dichtung eindrückt.

So ist aus US-A-5 582 415 eine gegebenenfalls einlagige Zylinderkopfdichtung bekannt, die eine gesickte und am Brennkammerrand umgefalzte Blechlage umfaßt, die in solchen Bereichen, in denen sich die Sicken befinden bzw. Teile der Dichtung mit anderen Teilen zumindest im eingebauten Zustand in Eingriff gelangen, mit einer Beschichtung versehen sind, die der Mikroabdichtung dient. Diese Beschichtung kann entsprechend den jeweiligen Anforderungen beispielsweise aus synthetischem Gummi, wie Silikongummi, anderen Kunststoffen, wie Expoxyd-, Acryl-, Polyvenylchloridharz oder PTFE, bestehen und Füllstoffe, wie Metallpulver oder Pulver aus organischen Materialien, wie Glas oder Keramik, oder entsprechende anorganische Fasern enthalten. Die Füllstoffe dienen dazu, den teueren Grundstoff der Beschichtung zu strecken, da sie erheblich billiger sind.

In bezug auf derartige Beschichtungen ist man bisher davon ausgegangen, daß diese trotz Verwendung von Füllstoffen so auszulegen sind, daß hierdurch der Reibbeiwert erniedrigt wird, damit die Verschleißfestigkeit erhöht wird, da zwischen Dichtung und Zylinderkopf bzw. Zylinderblock bzw. zwischen aneinanderliegenden Dichtungsteilen Gleitreibung aufgrund unterschiedlicher thermischer Ausdehnung der gegeneinander abzudichtenden Bauteile stattfindet.

Aufgabe der vorliegenden Erfindung ist es, eine Flachdichtung nach dem Oberbegriff des Anspruchs 1 zu schaffen, die es ermöglicht, den Verschleiß aufgrund von Mikroschwingungen praktisch zu vermeiden bzw. eine ausreichende Verdrehsicherheit der Bauteile, zwischen denen sie eingebaut wird, bzw. die Übertragung eines Drehmoments sicherzustellen.

Diese Aufgabe wird entsprechend dem kennzeichnenden Teil des Anspruchs 1 gelöst.

Hierbei erfolgt das Erhöhen der Reibung durch entsprechende Füllung der zur Mikroabdichtung dienenden Außenbeschichtung unter Verwendung eines hartkörnigen Füllstoffs, indem eine entsprechende Oberflächenrauhigkeit durch die Körner des Füllstoffs auf der Dichtungsaußenseite erzeugt wird. Hierbei wirken die in polymerem Bindemittel eingebetteten Füllstoffkörner einer Schwingung oder einer Verdrehung dadurch entgegen, daß sie durch das Einspannen der Dichtung aufeinandergepreßt werden, wodurch die innere Elastizität der Außenbeschichtung verringert und der Reibbeiwert erhöht wird. Es verbleibt aber genügend Weichheit und Anpassungsfähigkeit, damit die gewünschte Mikroabdichtung bewirkt werden kann.

Wie sich etwa bei Zylinderkopfdichtungen überraschenderweise herausgestellt hat, erfolgt der festgestellte starke Abrieb der Beschichtungen und der dadurch bewirkte Reibverschleiß im wesentlichen nicht durch Gleitreibung aufgrund von unterschiedlicher thermischer Ausdehnung der gegeneinander abzudichtenden Bauteile, sondern durch einen Schwingungsreibverschleiß aufgrund von Mikroschwingungen, die durch das aufeinanderfolgende Zünden und Expandieren des Brennstoffgemisches in den Zylindern bewirkt wird. Derartige Schwingungen besitzen eine sehr kleine Amplitude in der Größenordnung von etwa 2 µm. Um dem entgegenzuwirken, wird erfindungsgemäß dadurch, daß die Reibung, anstatt sie wie bisher herabzusetzen, erhöht wird, der Reibverschleiß deutlich verringert.

Bei Bauteilen, die sich gegeneinander verdrehen könnten, führt der entsprechend erhöhte Reibbeiwert zu der gewünschten Verdrehsicherheit der Bauteile bzw. der Möglichkeit der Übertragung eines Drehmoments, wenn Drehmomente in die Trennfuge zwischen den Bauteilen eingeleitet werden.

Weitere Ausgestaltungen der Erfindung sind der nachfolgenden Beschreibung und den Unteransprüchen zu entnehmen.

Als Füllstoff eignet sich vorzugsweise ein solcher mit einer Mohs'schen Härte von wenigstens 4, insbesondere wenigstens 6. Der Füllstoff kann beispielsweise aus einem oder mehreren Metallsilikaten und/ oder Metalloxiden bestehen. Hier kommen insbesondere Quarz, Korund, Feldspat oder andere Aluminiumoxide, vorzugsweise Elektrokorund, Diamant, Glas infrage. Die Körnung des Füllstoffs liegt zweckmäßigerweise hauptsächlich zwischen etwa 5 µm und etwa der halben Stärke der Mikroabdichtungsschicht. Die Mikroabdichtungsschicht ist stark gefüllt und enthält wenigstens 50 Gew.-Teile Füllstoff auf 100 Gew.-Teile polymeres Bindemittel.

Die gefüllte Mikroabdichtungsschicht wird zweckmäßigerweise in einer Stärke von etwa 10 bis 100 µm, insbesondere 15 bis 30 µm, aufgetragen. Die Mikroabdichtungsschicht kann als polymeres Bindemittel ein Elastomer, vorzugsweise einen Thermoplast mit einem Erweichungspunkt > 250 °C, insbesondere zwischen 300 und 330°C, enthalten. Für diese Schicht kommen beispielsweise Fluorelastomere (FPM), Nitrilbutadienkautschukelastomere (NBR), Siliconkautschuk (MVQ) oder Hartwachse, wie oxidierte Polyethylenwachse mit hoher Erweichungstemperatur infrage.

Die gefüllte Mikroabdichtungsschicht wird partiell zumindest im Bereich um die wenigstens eine Brennkammeröffnung herum etwa mittels Siebdruck oder ganzflächig etwa durch Spritzen, Gießen, Walzenbeschichtung aufgetragen und bei hierfür geeigneten Temperaturen gehärtet.

Insbesondere handelt es sich bei Anwendung bezüglich einer Zylinderkopfdichtung um eine solche mit wenigstens einem gesickten Deckblech als Funktionsblech und mit einer Zwischenlage, die einen Verformungsbegrenzer für die jeweilige um eine Brennkammeröffnung umlaufende Sicke des Deckblechs bildet, wobei der Scheitel der Sicke insbesondere vom benachbarten Bauteil (Zylinderkopf oder -block) abgewandt ist. Hierbei kann das Deckblech beidseitig oder nur außenseitig mit der gefüllten Mikroabdichtungsschicht beschichtet sein, wobei in letzterem Fall eine ungefüllte Mikroabdichtungsschicht an der Innenseite des Deckblechs vorgesehen sein kann.

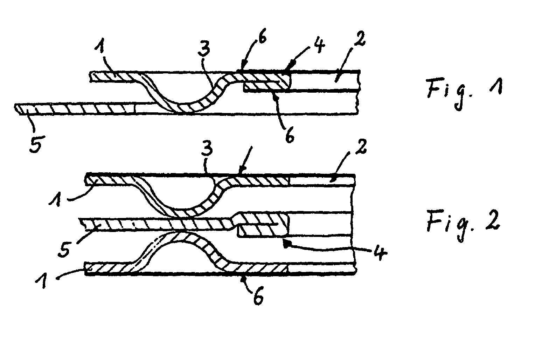

Das in Fig. 1 ausschnittweise im Schnitt dargestellte Ausführungsbeispiel einer Zylinderkopfdichtung umfaßt ein Deckblech 1 als Funktionslage zur Abdichtung des Spaltes zwischen Zylinderblock und - kopf einer Brennkraftmaschine. Die Dichtung weist ein oder mehrere in Reihe nebeneinander angeordnete Öffnungen 2 entsprechend den Brennräumen der zugehörigen Brennkraftmaschine (sowie nicht dargestellte Schraubendurchtrittslöcher und Durchtrittsöffnungen für Kühlwasser bzw. Öl) auf. Mit Abstand zur jeweiligen Öffnung 2 ist in dem Deckblech 1 eine Sicke 3 um die zugehörige; Öffnung 2 umlaufend vorgesehen, die als Federelement zur dynamischen Abdichtung des Spaltes zwischen Zylinderblock und -kopf dient. Zum Schutz der Sicke 3 ist ein Überhöhungsabschnitt 4 um den Rand der Öffnung 2 umlaufend vorgesehen, der, wie dargestellt, durch einen umgefalzten Blechabschnitt oder durch einen separaten, entsprechend etwa durch Schweißen befestigten Ring gebildet wird. Zusätzlich kann, wie dargestellt, ein Trägerblech 5 auf der in diesem Ausführungsbeispiel zum Zylinderblock gewölbten Seite der Sicke 3 angeordnet sein, das bei diesem Ausführungsbeispiel radial auswärts von der Sicke 3 endet.

Der Bereich des Überhöhungsabschnitts 4 ist hierbei an der dem Zylinderkopf zugewandten Seite mit einer gefüllten Mikroabdichtungsschicht 6 versehen, so daß durch Einspannen der Zylinderkopfdichtung in diesem Bereich eine hohe Reibung erzeugt wird, die trotz der Sickenbewegung eine Horizontalbewegung des Überhöhungsabschnitts 4 verhindert. Zusätzlich kann auch die dem Zylinderblock zugewandte Seite des Überhöhungsabschnitts 4 eine gefüllte Mikroabdichtungsschicht 6 tragen.

Der verbleibende Bereich des Deckblechs 1 kann ein oder beidseitig mit einer ungefüllten Mikroabdichtungsschicht versehen sein (nicht dargestellt), die dem jeweiligen Bauteil (Zylinderblock oder - kopf) in Eingriff kommende Seite des Deckblechs 1 kann aber auch ganzflächig mit der Mikroabdichtungsschicht 6 versehen sein, wie es bei der in Fig. 2 dargestellten Ausführungsform einer Zylinderkopfdichtung dargestellt ist. Hierbei wird das Deckblech 1 beidseits der Sicke 3 fest eingespannt, so daß sich die Sicke 3 entsprechend verformen muß.

Bei der in Fig. 2 ausschnittweise und im Schnitt dargestellten Ausführungsform sind zwei Deckbleche 1 spiegelsymmetrisch zueinander unter Zwischenschaltung eines Zwischenelements in Form eines Trägerblechs 5 vorgesehen, wobei am Zwischenelement der Überhöhungsabschnitt 4 ausgebildet ist.

Auch bei dem Ausführungsbeispiel von Fig. 2 ist es möglich, nur den Bereich zwischen der Öffnung 2 und der diese umgebenden Sicke 3 mit der gefüllten Mikroabdichtungsschicht 6 zu versehen.

## Patentansprüche

1. Ein- oder mehrlagige Flachdichtung zum Abdichten einer mindestens eine Öffnung (2) umgebenden Trennfuge zwischen zwei Bauteilen aus einem ein- oder beidseitig mit einer dünnen Mikroabdichtungsschicht (6) versehenen Metallblech (1), wobei die Mikroabdichtungsschicht (6) aus einem polymeren, einen Füllstoff enthaltenden Kunststoffmaterial besteht, **dadurch gekennzeichnet, daß** die Mikroabdichtungsschicht (6) mindestens auf einer Seite des Metallblechs (1) um die mindestens eine Öffnung (2) herum mit einem Füllstoff aus in dem als Bindemittel verwendeten Kunststoffmaterial eingebetteten, harten Körnern derart stark gefüllt ist, daß die Mikroabdichtungsschicht (6) bei eingespannter Dichtung ihre Elastizität verringert, wobei der Füllstoff eine Mohs'sche Härte von wenigstens 6 aufweist und seine Körnung hauptsächlich zwischen etwa 5 µm und etwa der halben Stärke der Mikroabdichtungsschicht (6) liegt.

2. Flachdichtung nach Anspruch 1, **dadurch gekennzeichnet, daß** der Füllstoff aus einem oder mehreren Metallsilikaten und/ oder Metalloxiden besteht.

3. Flachdichtung nach Anspruch 1 oder 2, **dadurch gekennzeichnet, daß** die Mikroabdichtungsschicht (6) wenigstens 50 Gew.- Teile Füllstoff auf 100 Gew.- Teile polymeres Bindemittel enthält.

4. Flachdichtung nach einem der Ansprüche 1 bis 3, **dadurch gekennzeichnet, daß** die Partikel des Füllstoffs bezüglich der Partikelgröße eine vorgegebene Korngrößenverteilung aufweisen.

5. Flachdichtung nach einem der Ansprüche 1 bis 4, **dadurch gekennzeichnet, daß** die Mikroabdichtungsschicht (6) eine Dicke im Bereich von 10 bis 100 µm, insbesondere 15 bis 30 µm, aufweist.

6. Flachdichtung nach einem der Ansprüche 1 bis 5, **dadurch gekennzeichnet, daß** die Mikroabdichtungsschicht (6) als polymeres Bindemittel ein Elastomer, vorzugsweise einen Thermoplast mit einem Erweichungspunkt > 250°C, insbesondere zwischen 300 und 330°C, enthält.

7. Flachdichtung nach einem der Ansprüche 1 bis 6, **dadurch gekennzeichnet, daß** das Metallblech (1) mit wenigstens einer Sicke und/ oder Halbsicke versehen ist.

8. Flachdichtung nach einem der Ansprüche 1 bis 7, **dadurch gekennzeichnet, daß** das die Mikroabdichtungsschicht (6) tragende Metallblech (1) ein Deckblech ist, das wenigstens eine Brennkammeröffnung (2) mit einer um diese umlaufenden Sicke (3) aufweist.

9. Flachdichtung nach Anspruch 8, **dadurch gekennzeichnet, daß** das Deckblech (1) an der dem benachbarten Bauteil abgewandten Seite zusätzlich eine gegebenenfalls gefüllte Mikroabdichtungsschicht (6) trägt.

## Claims

1. Single or multi-layer gasket for sealing a parting line surrounding at least one opening (2) between two components, made from a metal sheet (1) provided on one or both sides with a thin micro-sealing layer (6), where the micro-sealing layer (6) consists of a polymeric synthetic material containing a filler, **characterised in that** the micro-sealing layer (6), at least on one side of the metal sheet (1) around the at least one opening (2) is filled to such a level with a filler made from hard grains embedded in the synthetic material used as binding agent that the micro-sealing layer (6) reduces its elasticity when the gasket is mounted, where the filler has a Mohs hardness of at least 6 and its particle size lies mainly between about 5 µm and about half the thickness of the micro-sealing layer (6).

2. Gasket according to claim 1, **characterised in that** the filler consists of one or more metal silicates and/or metal oxides.

3. Gasket according to claim 1 or 2, **characterised in that** the micro-sealing layer (6) contains at least 50 parts by weight of filler for 100 parts by weight of polymeric binding agent.

4. Gasket according to one of claims 1 to 3, **characterised in that** the particles of the filler have a specified grain size distribution with respect to the particle size.

5. Gasket according to one of claims 1 to 4, **characterised in that** the micro-sealing layer (6) has a thickness in the range of 10 to 100 µm, in particular 15 to 30 µm.

6. Gasket according to one of claims 1 to 5, **characterised in that** the micro-sealing layer (6) contains, as polymeric binding agent, an elastomer, preferably a thermoplastic with a softening point > 250°C, in particular between 300 and 330°C.

7. Gasket according to one of claims 1 to 6, **characterised in that** the metal sheet (1) is provided with at least one bead and/or half-bead.

8. Gasket according to one of claims 1 to 7, **characterised in that** the metal sheet (1) supporting the micro-sealing layer (6) is a cover plate, which has at least one combustion chamber opening (2) with a bead (3) running around said opening.

9. Gasket according to claim 8, **characterised in that** the cover plate (1) on the side facing away from the adjacent component, additionally bears a micro-sealing layer (6) which may if necessary be filled.

## Revendications

1. Joint plat à une ou plusieurs couches, destinés à étanchéifier une ligne de séparation qui entoure au moins une ouverture (2) entre deux pièces, composés d'une tôle métallique (1) munie sur une face ou sur chaque face d'une mince couche de micro étanchéité (6), la couche de micro étanchéité (6) étant composée d'une matière synthétique polymère contenant une charge, **caractérisés en ce que** la couche de micro étanchéité (6) est chargée, au moins sur une face de la tôle métallique (1), sur tout le tour de l'ouverture (2), d'une charge faite de grains durs noyés dans la matière synthétique utilisée comme liant, **en ce que** la couche de micro étanchéité (6) subit une réduction d'élasticité lorsque le joint est serré, la charge présentant une dureté Mohs d'au moins 6 et sa granulométrie étant principalement comprise entre environ 5 µm et environ la moitié de l'épaisseur de la couche de micro étanchéité (6).

2. Joint plat selon la revendication 1, **caractérisé en ce que** la charge est composée d'un ou de plusieurs silicates métalliques et/ou oxydes métalliques.

3. Joint plat selon la revendication 1 ou 2, **caractérisé en ce que** la couche de micro étanchéité (6) renferme au moins 50 parties en poids de charge pour 100 parties en poids de liant polymère.

4. Joint plat selon une des revendications 1 à 3, **caractérisé en ce que**, en ce qui concerne la grosseur des particules, les particules de la charge présentent une distribution de granulométrie prédéterminée.

5. Joint plat selon une des revendications 1 à 4, **caractérisé en ce que** la couche de micro étanchéité (6) présente une épaisseur comprise dans l'intervalle de 10 à 100 µm, en particulier de 15 à 30 µm.

6. Joint plat selon une des revendications 1 à 5, **caractérisé en ce que** la couche de micro étanchéité (6) contient, comme liant polymère, un élastomère, de préférence un thermoplaste, possédant un point de ramollissement > 250 °C, en particulier entre 300 et 330 °C.

7. Joint plat selon une des revendications 1 à 6, **caractérisé en ce que** la tôle métallique (1) est munie d'au moins une nervure et/ou d'une demi-nervure.

8. Joint plat selon une des revendications 1 à 7, **caractérisé en ce que** la tôle métallique (1) qui porte la couche de micro étanchéité (6) est une tôle de recouvrement qui présente au moins une ouverture de chambre de combustion (2) munie d'une nervure (3) qui l'entoure.

9. Joint plat selon la revendication 8, **caractérisé en ce que** la tôle de recouvrement (1) porte en supplément une couche de micro étanchéité (6) éventuellement chargée, sur la face dirigée vers la pièce adjacente.
